# NEUE EUROPÄISCHE PATENTSCHRIFT

(11) **EP 2 755 039 B2**
(45) Veröffentlichungstag und Bekanntmachung des Hinweises auf die Entscheidung über den Einspruch: **26.10.2022**
(45) Hinweis auf die Patenterteilung: 03.10.2018
(21) Anmeldenummer: 13005583.3
(22) Anmeldetag: 30.11.2013
(51) Int. Cl.: G01P 3/44, B60T 8/17, G01P 3/48

(54) **ELEKTRONISCHES BREMSENSTEUERGERÄT, BREMSSYSTEM UND VERFAHREN ZUM BETRIEB DESSELBEN**
Electronic brake control device, brake system and method for operating the same
Appareil de commande de freinage électronique, système de freinage et son procédé de fonctionnement

(30) Priorität: 09.01.2013 DE 102013000276
(43) Veröffentlichungstag der Anmeldung: 16.07.2014
(73) Patentinhaber: ZF CV Systems Hannover GmbH, 30453 Hannover (DE)
(72) Erfinder: Gröger, Jens, 30449 Hannover (DE)

(56) Entgegenhaltungen:
- WO-A1-2005/035329
- WO-A1-2006/122623
- WO-A1-2010/127960
- DE-A1- 2 911 372
- DE-A1- 10 240 705
- DE-A1- 10 247 904
- DE-A1- 19 634 714
- DE-A1- 19 846 667
- DE-A1-102009 054 521
- DE-A1-102010 025 872

## Beschreibung

Die Erfindung betrifft ein elektronisches Bremssystem nach dem Oberbegriff des Anspruchs 1. Weiterhin betrifft die Erfindung ein Verfahren gemäß Anspruch 6 und ein Fahrzeug gemäß Anspruch 10.

Elektronische Bremssysteme für Fahrzeuge, insbesondere Lastkraftwagen, werden typischerweise kombiniert mit pneumatischen oder (seltener) hydraulischen Bremssystemen und bilden so elektro-pneumatische oder elektro-hydraulische Bremssysteme. Möglich sind auch elektromechanische Bremssysteme.

Spezifische Bestandteile eines elektronischen Bremssystems sind ein elektronisches Bremsensteuergerät und zumindest Raddrehzahlsensoren, so dass über die reine Bremsfunktion hinaus zusätzliche Funktionen ausführbar sind, insbesondere eine Antiblockierfunktion beim Bremsen.

Einige solcher Beispiele sind in den DE 198 46 667 A1 sowie in der WO 2006/122623 A1 offenbart. elektronisches Bremsensteuergerät ist jede Einheit, Teileinheit oder Baugruppe zu verstehen, mit der Daten, welche Bremsfunktionen betreffen, verarbeitet werden. Es kann sich beispielsweise auch um eine elektronische Schalteinheit handeln, die in einen sogenannten Achsmodulator integriert ist oder die Teil einer übergeordneten elektronischen Schalteinheit des Fahrzeugs ist.

Als Raddrehzahlsensoren werden üblicherweise sogenannte passive Sensoren verwendet. Passive Sensoren sind kostengünstiger und weniger temperaturempfindlich als aktive Sensoren. Als aktive Sensoren werden solche Sensoren bezeichnet, die eine Versorgungsspannung benötigen und vorzugsweise temperaturempfindliche Halbleiter enthalten.

Mit den passiven Raddrehzahlsensoren ist eine zuverlässige Erkennung niedriger Geschwindigkeiten und der Drehrichtung nicht möglich. Für bestimmte Funktionen werden demnach aktive Sensoren benötigt, so beispielsweise für eine Rollerkennung ab 0 km/h und eine Erkennung der Drehrichtung. Die Rollerkennung ist vorteilhaft verwendbar für Omnibusse an Haltestellen und generell bei Halt an ansteigenden oder abschüssigen Strecken. Für eine Realisierung dieser Funktionen müsste demnach das elektronische Bremssystem anstelle der kostengünstigen passiven Drehzahlsensoren teurere, aktive Drehzahlsensoren an den Rädern aufweisen.

Bestimmte, mit einem elektronischen Bremssystem ausgestattete Fahrzeuge, insbesondere Nutzfahrzeuge, weisen ein automatisiertes Getriebe mit elektronischem Getriebesteuergerät auf. Derartige Getriebe verfügen typischerweise über einen aktiven Drehzahlsensor an einer Getriebeausgangswelle. Der genannte aktive Drehzahlsensor wird bislang nur zur Steuerung des Getriebes verwendet und steht nicht in Verbindung mit dem elektronischen Bremssystem.

Aufgabe der vorliegenden Erfindung ist die Schaffung eines Bremsensteuergerätes bzw. eines elektronischen Bremssystems, mit dem auf einfache Weise eine Bestimmung niedriger Geschwindigkeiten und eine Drehrichtungserkennung der Räder möglich ist, insbesondere eine Rollerkennung ab 0 km/h und auch im Leerlauf des Getriebes.

Zur Lösung der Aufgabe weist das elektronische Bremssystem die Merkmale des Anspruchs 1 auf. Demnach verarbeitet das Bremsensteuergerät die Daten eines aktiven Drehzahlsensors an einer einem Ausgang des Getriebes zugeordneten Welle. Das Bremsensteuergerät erhält die Daten des aktiven Drehzahlsensors von Letzterem unmittelbar oder über ein anderes Steuergerät und einen Datenbus/eine geeignete Datenschnittstelle. Vorzugsweise ist der aktive Drehzahlsensor an einer Getriebeausgangswelle angeordnet. Der Sensor kann aber auch einer Welle zugeordnet sein, die mit der Getriebeausgangswelle in fester Verbindung steht und dadurch funktional dem Ausgang des Getriebes zugeordnet ist. Getriebeausgang und Antriebsräder des Fahrzeugs stehen in fester Verbindung miteinander, also auch im Leerlauf des Getriebes. Das heißt, sobald das Fahrzeug anrollt, drehen auch die Getriebeausgangswelle oder eine damit fest verbundene Welle. Entsprechend ist der im Bereich des Getriebeausgangs vorgesehene aktive Drehzahlsensor zur Detektion geringer Geschwindigkeiten und zur Fahrtrichtungserkennung geeignet. Auch ist die thermische Belastung des Sensors auf der Getriebeausgangswelle geringer oder eher beherrschbar als bei einem Sensor im Bereich der Radbremsen eines Nutzfahrzeugs. Auf zusätzliche aktive Drehzahlsensoren im Bereich der Räder des Fahrzeugs kann deshalb verzichtet werden.

Sofern das Bremsensteuergerät die Daten des aktiven Drehzahlsensors am Getriebeausgang über den Datenbus des Fahrzeugs erhält, ist für die Verarbeitung der Daten des aktiven Drehzahlsensors nur eine Anpassung der Software des Bremsensteuergerätes erforderlich. Typischerweise ist das Bremsensteuergerät an den Datenbus des Fahrzeugs angeschlossen. Alternativ kann am Bremsensteuergerät ein Anschluss für eine Verbindung zum aktiven Drehzahlsensor am Getriebeausgang vorgesehen sein.

Nach der Erfindung verarbeitet das Bremsensteuergerät die Daten des aktiven Drehzahlsensors zur Bestimmung einer Fahrzeuggeschwindigkeit ab 0 km/h und unterhalb einer Grenzgeschwindigkeit. Das heißt, das Bremsensteuergerät verarbeitet Geschwindigkeitsinformationen vorzugsweise zweistufig. Zwischen 0 km/h und einer Grenzgeschwindigkeit wird dann die tatsächliche Geschwindigkeit aus den Daten des aktiven Drehzahlsensors am Getriebeausgang abgeleitet. Oberhalb der Grenzgeschwindigkeit werden die Daten der üblicherweise vorhandenen passiven Raddrehzahlsensoren verwendet. Passende Grenzgeschwindigkeiten sind beispielsweise 6 km/h oder 10 km/h und liegen in der Nähe bzw. knapp oberhalb einer unteren Grenzgeschwindigkeit für die Geschwindigkeitserfassung durch passive Raddrehzahlsensoren.

Vorteilhafterweise verarbeitet das Bremsensteuergerät die Daten des aktiven Drehzahlsensors zur Bestimmung einer Drehrichtung der Welle und/oder einer Fahrtrichtung des Fahrzeugs. Die Drehrichtung bzw. Fahrtrichtung kann beispielsweise für das gesteuerte Festhalten des Fahrzeugs beim Anfahren auf nichtebener Strecke von Bedeutung sein.

Nach einem weiteren Gedanken der Erfindung verarbeitet das Bremsensteuergerät die Daten des aktiven Drehzahlsensors als Eingangsgröße für eine Haltestellenbremse und/oder für eine Funktion zum Festhalten des Fahrzeugs auf ansteigender oder abschüssiger Strecke. Die Haltestellenfunktion und/oder die sogenannte Hillholder-Funktion können so im Bremsensteuergerät auf einfache Weise, nämlich durch Anpassung der Software, realisiert werden. In beiden Fällen werden durch das Bremsensteuergerät die Betriebsbremsen beaufschlagt, um das Fahrzeug zu halten.

Sofern das mit dem elektronischen Bremssystem ausgestattete Fahrzeug ohnehin ein Getriebe mit Getriebesteuergerät und aktivem Drehzahlsensor am Getriebeausgang aufweist, können die Daten dieses Sensors an das elektronische Bremssystem übermittelt werden. Die gewünschten Funktionen können kostengünstig und auf einfache Weise realisiert werden. Bei Fahrzeugen ohne aktiven Drehzahlsensor am Getriebeausgang muss der Sensor ergänzt werden. Die zusätzlichen Kosten werden überkompensiert durch den nicht erforderlichen Eingriff in die üblichen Komponenten des elektronischen Bremssystems und die unter thermischen Gesichtspunkten günstigere Platzierung des aktiven Drehzahlsensors. Die Erfindung ist demnach nicht nur für Fahrzeuge mit Automatikgetriebe, Getriebesteuergerät und ohnehin vorgesehenem Drehzahlsensor am Getriebeausgang verwendbar, sondern auch für andere Fahrzeuge.

Vorteilhafterweise ist der aktive Drehzahlsensor unmittelbar über eine Leitung oder mittelbar über ein Steuergerät mit Datenschnittstelle bzw. einen Datenbus mit dem elektronischen Bremsensteuergerät gekoppelt. In Kraftfahrzeugen ist als Datenbus typischerweise ein CAN-Bus vorgesehen. Es kann aber auch ein anderer Datenbus zur Anwendung kommen. Je nach zu realisierender Funktion reicht die Geschwindigkeit der Datenübertragung über den Datenbus aus.

Nach dem Gedanken der Erfindung weist der aktive Drehzahlsensor einen Polring mit einer Verzahnung auf, welche feiner ist als eine Verzahnung eines dem aktiven Drehzahlsensor vorzugsweise zugeordneten Zahnrades auf der Welle des Getriebes. Sofern das Getriebe ohnehin einen aktiven Drehzahlsensor am Getriebeausgang aufweist, tastet der Sensor typischerweise die Zähne eines Zahnrades ab. Für bestimmte Anwendungen ist eine höhere Auflösung wünschenswert. Es kann deshalb ein Polring mit feinerer Verzahnung, insbesondere auf der Getriebeausgangswelle, vorgesehen sein.

Die Merkmale des erfindungsgemäßen Verfahrens ergeben sich aus Anspruch 5. Beim Betrieb eines elektronischen Bremssystems für Fahrzeuge mit Getriebe, insbesondere Nutzfahrzeuge, verarbeitet ein elektronisches Bremsensteuergerät insbesondere einen die Geschwindigkeit des Fahrzeugs repräsentierenden Wert. Vorgesehen ist, dass das elektronische Bremsensteuergerät Daten bzw. Ausgangswerte eines aktiven Drehzahlsensors verarbeitet, welcher an einer einem Ausgang des Getriebes zugeordneten Welle vorhanden ist. Durch Verarbeitung der Daten/Ausgangswerte dieses Sensors können Zusatzfunktionen des elektronischen Bremssystems realisiert werden, ohne dass das Fahrzeug aktive Raddrehzahlsensoren aufweisen muss. Insbesondere geht es um die Detektion niedriger Geschwindigkeiten bzw. eine Rollerkennung und die Erkennung der Drehrichtung.

Weiterbildungen des erfindungsgemäßen Verfahrens ergeben sich aus den Merkmalen der Ansprüche 6 und 7.

Ein erfindungsgemäßes Fahrzeug, insbesondere Nutzfahrzeug und/oder ein Fahrzeug mit einem vorzugsweise automatischen oder automatisierten Getriebe, weist ein elektronisches Bremssystem der beschriebenen Art auf.

Weitere Merkmale der Erfindung ergeben sich aus der Beschreibung im Übrigen und aus den Patentansprüchen. Vorteilhafte Ausführungsformen der Erfindung werden nachfolgend anhand von Zeichnungen näher erläutert. Es zeigen:
Fig. 1 eine stark vereinfachte, schematische Darstellung eines Fahrzeugs mit elektro-pneumatischem Bremssystem,
Fig. 2 eine Darstellung wie in Fig. 1, jedoch zusätzlich mit Getriebesteuergerät und CAN-Bus.

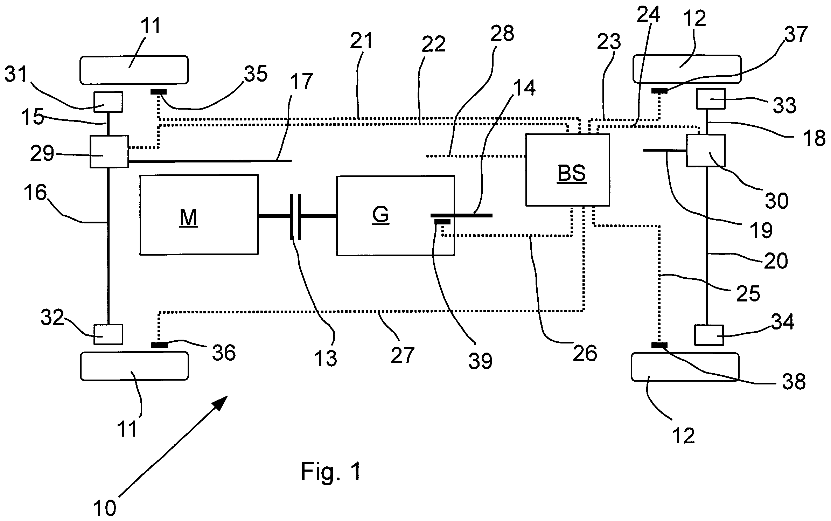

In einem Fahrzeug 10 mit zwei Vorderrädern 11, zwei Hinterrädern 12, Motor M, Getriebe G, Kupplung 13 und Getriebeausgangswelle 14 ist gemäß Fig. 1 ein elektro-pneumatisches Bremssystem vorgesehen. Dieses ist hier stark vereinfacht gezeichnet, nämlich ohne Druckluftvorrat und die zugehörigen Vorratsleitungen. Erkennbar sind durchgezogene Linien als den Arbeitsdruck führende pneumatische Leitungen, nämlich Leitungen 15, 16, 17, 18, 19 und 20. Außerdem sind Datenleitungen 21, 22, 23, 24, 25, 26, 27 und 28 vorgesehen, die gestrichelt gezeichnet sind und über die Informationen und Steuerbefehle austauschbar sind.

An ein nicht gezeigtes Bremspedal als Bremswertgeber für eine Betriebsbremse sind die pneumatischen Leitungen 17, 19 und die Datenleitung 28 angeschlossen. Bei Betätigung des Bremspedals gelangt eine entsprechende Information über die Datenleitung 28 in ein elektronisches Bremsensteuergerät BS. Von dort werden über die Datenleitungen 22, 24 ein Druckregelmodul 29 für Bremsen einer Vorderachse und ein Druckregelmodul 30 für Bremsen einer Hinterachse angesteuert. Zugleich gelangt über die pneumatischen Leitungen 17, 19 bei der Betätigung des Bremspedals entsprechender Arbeitsdruck in die Druckregelmodule 29, 30. Diese beaufschlagen über die pneumatischen Leitungen 15, 16 vordere Radbremszylinder 31, 32 und über die pneumatischen Leitungen 18, 20 hintere Radbremszylinder 33, 34.

Das elektro-pneumatische Bremssystem ist mit einer Antiblockierfunktion ausgestattet. Hierzu und für andere Funktionen sind den Vorderrädern 11 und Hinterrädern 12 Raddrehzahlsensoren 35, 36, 37, 38 zugeordnet, nämlich je Rad ein Raddrehzahlsensor. Beim Bremsen werden laufend die Raddrehzahlen an das elektronische Bremsensteuergerät BS über die Datenleitungen 21, 23, 25, 27 übermittelt. Bei Bedarf regelt das Bremsensteuergerät BS den Arbeitsdruck für die Druckregelmodule 29, 30 neu ein.

Die Raddrehzahlsensoren 35 bis 38 sind als passive Sensoren ausgeführt. Diese erkennen nicht die Drehrichtung der Räder 11, 12. Auch ist eine Geschwindigkeitserkennung bei sehr niedrigen Geschwindigkeiten nicht möglich. Für die Kernfunktion des Antiblockiersystems, nämlich für blockierfreie Bremsungen aus mittleren und hohen Geschwindigkeiten, ist dies unschädlich. Für andere Anwendungen, zum Beispiel für die Überwachung eines kurzzeitigen Stillstands oder beim Rangieren, können die Erkennung auch kleinster Geschwindigkeiten und/oder des Unterschieds zwischen Vorwärts- und Rückwärtsfahrt von Bedeutung sein.

Im vorliegenden Fall ist an der Getriebeausgangswelle 14 des Getriebes G ein aktiver Drehzahlsensor 39 vorgesehen, welcher über die Datenleitung 26 mit dem Bremsensteuergerät BS verbunden ist. Die Getriebeausgangswelle 14 ist unterbrechungsfrei mit den Hinterrädern 12 gekoppelt, so dass ein Anrollen des Fahrzeugs 10 sowie die Fahrtrichtung durch den Sensor 39 detektierbar sind und die entsprechenden Daten im Bremsensteuergerät BS zur Verfügung stehen. Über das Bremsensteuergerät BS sind unter Verwendung der Daten des Sensors 39 Komfortfunktionen realisierbar, zum Beispiel eine Verhinderung des Anrollens auch ohne gewollte Betätigung des (hier nicht gezeigten) Gaspedals für den Motor M. Dabei steht die Position des Gaspedals im Bremsensteuergerät BS als Information zur Verfügung. Mit dieser Funktion kann beispielsweise ein Omnibus an Haltestellen gegen unbeabsichtigtes Anrollen gesichert werden, was gerade für Fahrzeuge mit barrierefreiem (behindertengerechtem) Zugang von Bedeutung ist.

Die Datenleitungen 21 bis 28 können wie gezeigt direkt an das Bremsensteuergerät BS angeschlossen sein oder aber über einen Datenbus, etwa einen CAN-Bus, mit dem Bremsensteuergerät BS verbunden sein.

Der aktive Drehzahlsensor 39 kann die Zähne eines nicht gezeigten Zahnrades auf der Getriebeausgangswelle 14 abtasten. Auf der Getriebeausgangswelle 14 ist ein zusätzlicher Polring mit feinerer Verzahnung vorgesehen, der vom aktiven Drehzahlsensor 39 abgetastet wird.

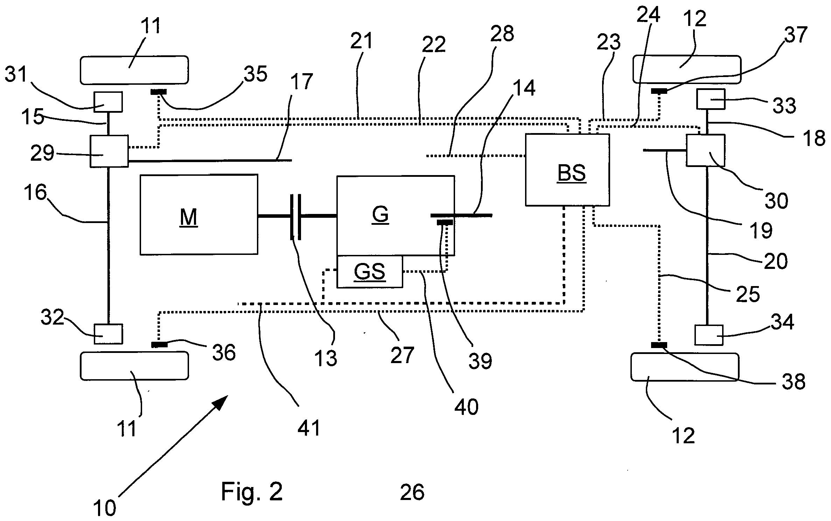

Eine leicht abgewandelte Ausführung zeigt Fig. 2. Das Getriebe G ist hier ein automatisiertes Getriebe mit Getriebesteuergerät GS. Die Kupplung 13 ist elektronisch betätigt. Der aktive Drehzahlsensor 39 an der Getriebeausgangswelle 14 ist über eine Datenleitung 40 an das Getriebesteuergerät GS angeschlossen, nicht an das Bremsensteuergerät BS. Getriebesteuergerät GS und Bremsensteuergerät BS sind beide an einen CAN-Bus 41 angeschlossen. Somit werden in diesem Ausführungsbeispiel die Daten des aktiven Drehzahlsensors 39 über das Getriebesteuergerät GS und den CAN-Bus 41 verteilt und stehen dadurch auch dem Bremsensteuergerät BS zur Verfügung.

## Patentansprüche

1. Elektronisches Bremssystem für Fahrzeuge mit Getriebe, insbesondere Nutzfahrzeuge, und mit einem elektronischen Bremsensteuergerät (BS) für ein Fahrzeug mit Getriebe, **gekennzeichnet durch** die Verarbeitung von Daten eines aktiven Drehzahlsensors (39) an einer Getriebeausgangswelle (14) oder einer mit der Getriebeausgangswelle (14) in fester Verbindung stehenden Welle,
wobei der aktive Drehzahlsensor (39) einen Polring mit einer Verzahnung aufweist, welche feiner ist als eine Verzahnung eines dem aktiven Drehzahlsensor vorzugsweise zugeordneten Zahnrades auf der Getriebeausgangswelle (14) oder der mit der Getriebeausgangswelle (14) in fester Verbindung stehenden Welle und
wobei die Daten des aktiven Drehzahlsensors (39) zur Bestimmung einer Fahrzeug-Geschwindigkeit ab 0 km/h und unterhalb einer Grenzgeschwindigkeit verarbeitet werden, wobei oberhalb der Grenzgeschwindigkeit Daten von passiven Raddrehzahlsensoren verwendet werden.

2. Bremssystem nach Anspruch 1, **dadurch gekennzeichnet, dass** die Daten des aktiven Drehzahlsensors (39) zur Bestimmung einer Drehrichtung der Welle (14) und/oder einer Fahrtrichtung des Fahrzeugs verarbeitet werden.

3. Bremssystem nach Anspruch 1 oder 2, **dadurch gekennzeichnet, dass** die Daten des aktiven Drehzahlsensors (39) als Eingangsgröße für eine Haltestellenbremse und/oder für eine Funktion zum Festhalten des Fahrzeugs auf ansteigender oder abschüssiger Strecke verarbeitet werden.

4. Bremssystem nach Anspruch 1, **dadurch gekennzeichnet, dass** der aktive Drehzahlsensor (39) unmittelbar über eine Leitung (26) oder mittelbar über ein Steuergerät mit Datenschnittstelle/einen Datenbus mit dem Bremsensteuergerät (BS) gekoppelt ist.

5. Verfahren zum Betrieb eines elektronischen Bremsensteuergerätes (BS) und/oder eines elektronischen Bremssystems für Fahrzeuge mit Getriebe, vorzugsweise Nutzfahrzeuge, zum Betrieb eines Bremssystems nach einem der voranstehenden Ansprüche 1 bis 4, wobei das elektronische Bremsensteuergerät (BS) insbesondere einen die Geschwindigkeit des Fahrzeugs repräsentierenden Wert verarbeitet, **dadurch gekennzeichnet, dass** das elektronische Bremsensteuergerät (BS) Daten bzw. Ausgangswerte eines aktiven Drehzahlsensors (39) verarbeitet, welcher an einer Getriebeausgangswelle (14) oder einer mit der Getriebeausgangswelle (14) in fester Verbindung stehenden Welle vorgesehen ist, wobei die Daten des aktiven Drehzahlsensors zur Bestimmung einer FahrzeugGeschwindigkeit insbesondere ab 0 km/h und vorzugsweise unterhalb einer Grenzgeschwindigkeit verarbeitet werden, wobei oberhalb der Grenzgeschwindigkeit Daten von passiven Raddrehzahlsensoren verwendet werden.

6. Verfahren nach Anspruch 5, **dadurch gekennzeichnet, dass** die Daten des aktiven Drehzahlsensors (39) zur Bestimmung einer Drehrichtung der Welle (14) und/oder einer Fahrtrichtung des Fahrzeugs verarbeitet werden.

7. Verfahren nach einem der Ansprüche 5 bis 6, **dadurch gekennzeichnet, dass** die Daten des aktiven Drehzahlsensors (39) als Eingangsgröße für eine Haltestellenbremse und/oder für eine Funktion zum Festhalten des Fahrzeugs auf ansteigender oder abschüssiger Strecke verarbeitet werden.

8. Fahrzeug, insbesondere Nutzfahrzeug und/oder vorzugsweise mit einem automatischen oder automatisierten Getriebe, **gekennzeichnet durch** ein elektronisches Bremssystem nach einem der Ansprüche 1 bis 4.

## Claims

1. Electronic brake system for vehicles having a transmission, in particular utility vehicles, and having an electronic brake control device (BS) for a vehicle having a transmission, **characterized by** the processing of data of an active rotational speed sensor (39) on a transmission output shaft (14) or a shaft that is fixedly connected to the transmission output shaft (14), wherein the active rotational speed sensor (39) has a pole ring with a toothing arrangement which is finer than a toothing arrangement of a gearwheel, preferably assigned to the active rotational speed sensor, on the transmission output shaft (14) or the shaft that is fixedly connected to the transmission output shaft (14) and wherein the data of the active rotational speed sensor (39) are processed in order to determine a vehicle speed, starting from 0 km/h and below a limiting speed, wherein, above the limiting speed, data of passive wheel rotational speed sensors are used.

2. Brake system according to Claim 1, **characterized in that** the data of the active rotational speed sensor (39) are processed in order to determine a rotational direction of the shaft (14) and/or a direction of travel of the vehicle.

3. Brake system according to Claim 1 or 2, **characterized in that** the data of the active rotational speed sensor (39) are processed as an input variable for a frequent-stop brake and/or for a function for arresting the vehicle on a rising section of road or steep section of road.

4. Brake system according to Claim 1, **characterized in that** the active rotational speed sensor (39) is coupled to the brake control device (BS) directly via a line (26) or indirectly via a control device with a data interface/a data bus.

5. Method for operating an electronic brake control device (BS) and/or an electronic brake system for vehicles having a transmission, preferably utility vehicles, for operating a brake system according to one of the preceding Claims 1 to 4, wherein the electronic brake control device (BS) processes, in particular, a value representing the speed of the vehicle, **characterized in that** the electronic brake control device (BS) processes data and/or output values of an active rotational speed sensor (39) which is provided on a transmission output shaft (14) or a shaft that is fixedly connected to the transmission output shaft (14), wherein the data of the active rotational speed sensor are processed in order to determine a vehicle speed, in particular starting from 0 km/h and preferably below a limiting speed, wherein, above the limiting speed, data of passive wheel rotational speed sensors are used.

6. Method according to Claim 5, **characterized in that** the data of the active rotational speed sensor (39) are processed in order to determine a rotational direction of the shaft (14) and/or a direction of travel of the vehicle.

7. Method according to either of Claims 5 and 6, **characterized in that** the data of the active rotational speed sensor (39) are processed as an input variable for a frequent-stop brake and/or for a function for arresting the vehicle on a rising or steep section of road.

8. Vehicle, in particular utility vehicle and/or preferably having an automatic or automated transmission, **characterized by** an electronic brake system according to one of Claims 1 to 4.

## Revendications

1. Système de frein électronique destiné à des véhicules automobiles équipés d'une boîte de vitesses, notamment des véhicules utilitaires, et comprenant un contrôleur de frein électronique (BS) destiné à un véhicule équipé d'une boîte de vitesses, **caractérisé par** le traitement de données d'un capteur de vitesse de rotation actif (39) au niveau d'un arbre de sortie de boîte de vitesses (14) ou d'un arbre relié de manière fixe à l'arbre de sortie de boîte de vitesses (14), le capteur de vitesse de rotation (39) actif possédant un anneau polaire muni d'une denture, laquelle est plus fine qu'une denture d'une roue dentée, de préférence associée au capteur de vitesse de rotation actif, sur l'arbre de sortie de boîte de vitesses (14) ou l'arbre relié de manière fixe à l'arbre de sortie de boîte de vitesses (14), les données du capteur de vitesse de rotation actif (39) étant traitées pour déterminer une vitesse de véhicule supérieure à 0 km/h et inférieure à une vitesse limite, des données provenant de capteurs de vitesse de rotation de roue étant utilisées au-delà de la vitesse limite.

2. Système de frein selon la revendication 1, **caractérisé en ce que** les données du capteur de vitesse de rotation actif (39) sont traitées pour déterminer un sens de rotation de l'arbre (14) et/ou un sens de déplacement du véhicule.

3. Système de frein selon la revendication 1 ou 2, **caractérisé en ce que** les données du capteur de vitesse de rotation actif (39) sont traitées en tant que grandeur d'entrée pour un frein de point d'arrêt et/ou pour une fonction de retenue du véhicule sur un tronçon en pente montante ou descendante.

4. Système de frein selon la revendication 1, **caractérisé en ce que** le capteur de vitesse de rotation actif (39) est connecté directement par le biais d'une ligne (26) ou indirectement par le biais d'un contrôleur muni d'une interface de données/d'un bus de données au contrôleur de frein (BS).

5. Procédé pour faire fonctionner un contrôleur de frein électronique (BS) et/ou un système de frein électronique destinés à des véhicules équipés d'une boîte de vitesses, de préférence des véhicules utilitaires, selon l'une des revendications précédentes 1 à 4, le contrôleur de frein électronique (BS) traitant notamment une valeur qui représente la vitesse du véhicule, **caractérisé en ce que** le contrôleur de frein électronique (BS) traite des données ou des valeurs de sortie d'un capteur de vitesse de rotation actif (39) qui est prévu au niveau d'un arbre de sortie de boîte de vitesses (14) ou de l'arbre relié de manière fixe à l'arbre de sortie de boîte de vitesses (14), les données du capteur de vitesse de rotation actif étant traitées pour déterminer une vitesse du véhicule, notamment supérieure à 0 km/h et de préférence inférieure à une vitesse limite, des données provenant de capteurs de vitesse de rotation de roue étant utilisées au-delà de la vitesse limite.

6. Procédé selon la revendication 5, **caractérisé en ce que** les données du capteur de vitesse de rotation actif (39) sont traitées pour déterminer un sens de rotation de l'arbre (14) et/ou un sens de déplacement du véhicule.

7. Procédé selon l'une des revendications 5 à 6, **caractérisé en ce que** les données du capteur de vitesse de rotation actif (39) sont traitées en tant que grandeur d'entrée pour un frein de point d'arrêt et/ou pour une fonction de retenue du véhicule sur un tronçon en pente montante ou descendante.

8. Véhicule, notamment véhicule utilitaire et/ou de préférence équipé d'une boîte de vitesses automatique ou automatisée, **caractérisé par** un système de frein électronique selon l'une des revendications 1 à 4.
